# EUROPEAN PATENT SPECIFICATION

(11) **EP 3 809 845 B1**
(45) Date of publication and mention of the grant of the patent: **27.12.2023**
(21) Application number: 19823465.0
(22) Date of filing: 04.06.2019
(51) Int. Cl.: A01N 25/04, A01N 25/28, A01N 53/00, B01J 13/16, A01N 47/34, B01J 13/14, A01P 7/00

(54) **STABLE CO-FORMULATION OF BENZOYLUREA WITH PYRETHROIDS**
STABILE CO-FORMULIERUNG VON BENZOYLHARNSTOFF MIT PYRETHROIDEN
CO-FORMULATION STABLE DE BENZOYLURÉE AVEC DES PYRÉTHROÏDES

(30) Priority: 18.06.2018 IN 201831022744
(43) Date of publication of application: 28.04.2021
(60) Divisional application: 23155682.0
(73) Proprietor: UPL Ltd, Haldia, West Bengal 721 602 (IN)
(72) Inventor: MORE, Pravin, Namadeo, Mumbai 400051 (IN); SHIRSAT, Rajan, Ramakant, Mumbai 400051 (IN); SHROFF, Jaidev, Rajnikant, Dubai (AE); SHROFF, Vikram, Rajnikant, Dubai (AE)
(74) Representative: J A Kemp LLP
(86) International application number: PCT/IB2019/054624
(87) International publication number: WO 2019/243927

(56) References cited:
- EP-A1- 2 589 290
- WO-A1-97/14308
- WO-A1-2015/127051
- WO-A1-2018/001895
- WO-A2-2009/000545
- CN-A- 107 494 584
- US-A1- 2005 233 986
- US-A1- 2014 287 920
- US-A1- 2015 230 471
- US-A1- 2017 105 418

## Description

### FIELD OF THE INVENTION

The present invention relates to an insecticidal co-formulation. More specifically, the present invention relates to the insecticidal co-formulation of lambdacyhalothrin and novaluron.

### BACKGROUND OF THE INVENTION

In the practice of pest control, particularly insect control, there are two main factors which determine the effectiveness of the treatment; 1) immediate action on the pests (known in the art as "knock-down action"), and 2) long-term action (known also as "residual action"). Knock-down insecticides include pyrethroids, organic phosphoric acid esters, neonicotinoids and phenyl pyrazoles. Long-term insecticides include insect growth regulators (IGR) of various types, e.g. benzoyl urea or chitin synthesis inhibitors. For the effective treatment, combination of knock-down insecticides and long-term insecticides is largely appreciated as it provides complete and extended control of insects at the site of treatment.

Apart from effective treatment, risk of human exposure and environmental damage becomes major concern while making pesticide formulations, especially insecticide formulations. During the past three decades, efforts have been made to formulate safer and more effective insecticide formulations that spare natural enemies and non-target organisms.

Combination treatments of knock-down and long-term insecticides have been reported. Based on chemical class, combination of benzoyl urea with pyrethroids offers best protection from pests, especially insects. However, the challenge in developing such formulation is to develop a stable system wherein both the active ingredients (benzoylurea, particularly novaluron and pyrethroids) of diverse physicochemical profile remain in harmony within the system. And at the same time, safety issues related to human health and environment are addressed properly.

Benzoylureas are a class of insecticides that act by interfering with the formation of chitin and, thus, block molting to the next larval stage. In this way, the life cycle of the insect is interrupted. Benzoylurea insecticides are used as nonsystemic insect growth regulators for control of a wide range of leaf-eating insects and their larvae. Benzoylurea, such as Novaluron are a new generation of benzoyl urea insecticides, that controls lepidoptera fruits, vegetables, cotton, corn, and other crops, coleoptera, hemiptera and diptera head larvae, whiteflies and other insects. Chemical abstract name of novaluron is (±)-*N*-[[[3-chloro-4-[1,1,2-trifluoro-2-(trifluoromethoxy)ethoxy]phenyl]amino]carbonyl]-2,6-difluorobenzamide, its chemical structural formula is:

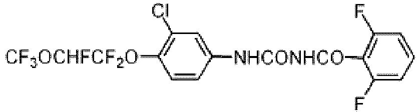

Pyrethroid compounds are widely used for the control of insect pests in agricultural areas as well as for structural pest control in urban areas. This class of pesticides is non-systemic and has contact and stomach action. Pyrethroids are highly nonpolar, have low water solubility, low volatility, high octanol-water partition coefficients, and have high affinity for soil and sediment particulate matter. Because of their low water solubility, pyrethroids are currently formulated into various usable forms such as emulsifiable concentrates (ECs), liquid concentrate (SL), and suspension concentrates (SC) that use petroleum or non-petroleum-based solvents along with anionic and non-ionic emulsifiers and stabilizers.

CN 102228053 discloses an insecticidal formulation comprises novaluron and pyrethroids (deltamethrin or bifenthrin) as active ingredients at wt. ratio of 1:60-60:1. The formulations have marked synergistic effect, broad insecticidal spectrum, low dosage, low environmental pollution, and good environment compatibility. However, CN102228053 does not present any solution to develop stable formulation of these two active ingredients nor it presented any solution to tackle safety issues while using insecticides in the formulations, especially pyrethroids.

CN103814940A discloses an ultra-low volume liquid containing novaluron and pyrethroid insecticide as an efficient formulation with low toxicity and residue of pesticides. The formulation further claims high efficiency with wider synergy spectrum. However, no efforts have been taken to tackle toxicity related issues of pyrethroid compounds.

CN102326570A discloses pesticide composition containing novaluron and antibiotics compound selcted from avermectins, emamectin benzoate and ivermectin. The pesticide composition can control different pests, has an obvious synergic effect, can enhance the pesticide spectrum and has high activities to sucking insects and lepidopteran insects. However, the composition utilizes antibiotics which are macrocyclic lactone disaccharide compounds, safer for the environment, human beings and animals but lack on the effectiveness part when compared to pyrethroids.

EP2 589 290 A1 describes microcapsules comprising a pyrethroid and/or neonicontinoid and a synergizing agent.

WO 2009/000545 A2 describes a method for modulating the release rate of microencapsulated active ingredients.

WO 97/14308 A1 describes microencapsulated insecticide preparations and a process for the preparation thereof.

WO2015/127051 A1 describes high-load pyrethroid encapsulated seed treatment formulations.

Although attempts have been made to combine novaluron (long term) and pyrethroids (knock down) but still there is a need to provide stable co-formulation which also addresses safety issues. Hitherto, no attempts have been made to solve the stability of co-formulation comprising benzoylurea insecticides, particularly novaluron and pyrethroids which remain steady throughout the product lifecycle and also remain non-irritant to the human skin.

Microencapsulation of active ingredients is a common method of delivery in the agrochemical industry, especially for those active ingredients that are toxic to handle. Such actives include for example, pyrethroid class of insecticides as well as other agrochemicals. Pyrethroids are known irritants and have low to moderate LD₅₀ (Lethal Dose, 50%) values. Microencapsulation of such toxic molecules help in increasing the safety in handling product containing such molecules as well as increasing the efficacy of the active ingredient by ensuring greater contact with the target. However, it is often seen that microencapsulation also leads to an unintended reduction of the short term insecticidal effect, which is undesirable in the case of pyrethroid insecticides. This short term insecticidal effect in synthetic pyrethroids is essential to provide a satisfactory field efficacy. Thus, there exists a need in the art for an encapsulated formulation, particularly including synthetic pyrethroids, which improves the safety of handling the product without a concomitant reduction in the short term insecticidal activity of the product.

An active ingredient may be encapsulated for various reasons, for example, where the active is required to remain in the environment over a long period of time, controlled release microcapsules may be favored. In some cases the active ingredients have to be introduced into the environment for a short period but in high quantity to be effective, in such cases quick release microcapsules may be preferred. The nature of the wall of the capsules thus determines the type of release profile of the active. Also, the use of solvents in such microcapsule formulation is necessary for actives which are sparingly soluble in water. At times the solvents used in the emulsification step can be highly toxic and harmful to the environment.

Microencapsulation of an active may be used in certain cases to form controlled release compositions which ensure the release of the active over longer periods of time, this is particularly advantageous for pre emergent herbicides which are expected to remain in the soil for longer periods of time, thereby ensuring control of emerging weeds. Such control release microcapsules are discussed in US4285720 (Scher). Scher discusses the use of organic polyisocyanates in interfacial polymerization to form polyurethane capsules. US4285720 also discloses that an organic polyisocyanate such as polymethylene polyphenylisocyanate and tolyene diisocyanate (TDI) must be used in a precise ratio so as to obtain the desired wall structure of the capsules of polyurea of appropriate thickness so as to obtain a delayed release profile. The process needs to be temperature and pH controlled and needs a catalyst to initiate the polymerization reaction.

In case of formulations meant for foliar applications, a quick release formulation is more favorable so as to maintain a high level of the active for shorter period of time. US6133197 (Chen at.al) discusses a quick release microencapsulation formulation formed by using a diisocyanate and a polyisocyanate in a specified ratio. Such a process would result in the formation of polyurea microcapsules which have a quick release profile. The process needs to be temperature controlled and the pH of the emulsion has to be adjusted to obtain stability and initiate the polymerization reaction, this result in a time consuming and economically unviable procedure. Also, the invention uses toxic solvents and expensive ingredients which can harm the environment and the crops as well as increase the cost of the end product. The shell wall made from polyurea alone is unstable and thus results in higher toxicity.

The present invention aims to overcome the problems in the prior art, namely, the need for a stable microcapsule formulation that has a reasonably fast release profile and has lower toxicity, thereby causing lesser damage to the environment or crops. The use of environmentally friendly solvent is another added advantage and the demand of the hour due to stringent environmental regulations. Also, the technique used to prepare the microcapsules is needed to be quick and economically more viable.

Accordingly, there exists a need in the art for preparing desired speed of knock-down formulation of pyrethroid, and yet simultaneously which is also compatible with co-formulation of benzoylurea compounds.

### OBJECTIVES

It is an objective of the disclosure to provide a stable co-formulation comprising knock-down insecticides and long-term action insecticides.

Another objective of the disclosure is to provide a stable co-formulation of benzoylurea and pyrethroids.

Another objective of the disclosure is to provide a stable co-formulation of benzoylurea and encapsulated pyrethroids which does not cause human skin irritation.

Another object of the present disclosure is to provide a process of preparing stable co-formulation of benzoylurea and encapsulated pyrethroids.

Another object of the present disclosure is to provide methods of controlling insects using the co-formulation of the present invention.

It is another object of the present disclosure to provide a microencapsulated pyrethroid formulation with low toxicity.

It is another object of the present disclosure to provide a microencapsulation process which allows for very low free active ingredient content.

It is yet another object of the present disclosure to provide a process for preparing microcapsules which is an economically viable and quick process.

### SUMMARY OF THE INVENTION

The invention is as defined in the claims. Accordingly, a first aspect of the invention provides a co-formulation comprising:
(a) microencapsulated formulation comprising a lambdacyhalothrin, solubilized in soyabean oil, the solubilized lambdacyhalothrin being encapsulated in a capsule having a polymeric shell wall; and
(b) a suspension concentrate comprising novaluron.

A second aspect of the invention provides a process for preparation of the stable co-formulation of the first aspect of the invention, said process comprising:
a. preparing an encapsulated lambda-cyhalothrin formulation;
b. preparing a novaluron suspension concentrate formulation; and
c. preparing a co-formulation of lambda-cyhalothrin and novaluron by mixing suspension concentrate of lambda-cyhalothrin and novaluron.

A third aspect of the invention provides a method of controlling or preventing unwanted pests, said method comprising, applying an effective amount of the co-formulation of the first aspect of the invention to the pests or to their locus.

### DETAILED DESCRIPTION OF THE INVENTION

Surprisingly, it has now been found that a capsule suspension formed by encapsulating lambdacyhalothrin suspended in soyabean oil results in stable CS formulation of pyrethroids. When such a CS formulation containing lambdacyhalothrin is mixed with suspension concentrate of novaluron the resulting ZC formulation is also surprisingly stable. It is believed that the vegetable oil does not interact with the solvent phase of the novaluron and results into a stable co-formulation of lambdacyhalothrin (knock-down insecticide) and novaluron (long-term insecticide). Also, encapsulation of lambdacyhalothrin with protective coating or shell prevents skin exposure causing paranaesthesia (hyperactivity of cutaneous sensory nerve fibers leading to skin irritation). The protective coating of pyrethroids ruptures at the time of desired action.

In another embodiment, the addition of an aliphatic diol to the aqueous phase prior to the encapsulation reaction enabled the inventors to produce microcapsules with granulometry of below 5 µm.

In an aspect, the capsule suspension achieves a quick release of the encapsulated pyrethroid insecticide.

Accordingly, an aspect provides a microencapsulated formulation comprising a lambdacyhalothrin solubilized in soyabean oil the solubilized pyrethroid insecticide being encapsulated in a capsule having a polymeric shell wall.

An aspect provides a microencapsulated formulation comprising lambdacyhalothrin insecticide solubilized in soyabean oil and encapsulated in a capsule having a polymeric shell wall made by an interfacial polymerization reaction occurring between an organic phase emulsified in an aqueous phase.

In an aspect, the aqueous phase comprises an aliphatic diol added prior to the encapsulation reaction.

Described herein is a microcapsule formulation and a process for making the same, wherein the lambdacyhalothrin is solubilized in soyabean oil.

It has been found that the microcapsule has a release profile such that the pyrethroid insecticide is released at a rapid rate and reaches the highest point of release in a day, preferably the highest point of release by 10-12 hours, and most preferably the highest point of release in 5 hours.

The solubilization of the pyrethroid insecticide in soyabean oil and optionally in the presence of aliphatic diols in the aqueous phase added prior to the encapsulation reaction, leads to these surprising benefits.

Accordingly, this aspect provides a microencapsulated formulation comprising lambdacyhalothrin solubilized in soyabean oil and encapsulated in a capsule having a polymeric shell wall made by an interfacial polymerization reaction occurring between an organic phase emulsified in an aqueous phase.

In an aspect, the aqueous phase comprises at least one aliphatic diol added prior to emulsification.

In an aspect, the microcapsules have a shell wall consisting of polyurea.

In an aspect, the microcapsules have a shell wall consisting of polyurea and polyurethane wherein, the polyurethane is quantitatively less than the polyurea.

The shell wall of the microcapsule demonstrates a higher stability as compared to a capsule made from polyurea only.

In an aspect, the shell walls of the microcapsules are thinner than conventional polyurea shell walls so as have a faster release profile. The polyurethane polymers are also formed due to reaction between propylene glycol and the isocyanates present in the emulsion, which has been added to the aqueous phase prior to emulsification.

The microcapsules help in decreasing the toxicity of the lambdacyhalothrin that is encapsulated and is thus ideal for those active ingredients that are highly toxic and are required to maintain a high level of efficacy for shorter periods of time. The process for preparing the present microcapsules also ensures very little free content of the active ingredient, thereby ensuring maximum encapsulation of the active within the microcapsules.

The process for preparing the microcapsules involves the use of interfacial polymerization technique. The process involves preparing two phases, the first being the organic phase which comprises the lambdacyhalothrin to be encapsulated, which is water immiscible and solubilized in soyabean oil, and an isocyanate.

The second phase being an aqueous phase comprises a protective colloid, and water.

In an aspect, the aqueous phase comprises at least one aliphatic diol added prior to emulsification.

The two phases are then mixed to form an oil-in-water emulsion under high shear. Amines or salts thereof may then be added to the emulsion to form polymers of polyurea.

In an aspectwhere the aqueous phase comprised an aliphatic diol, the polyurea shell wall cross link with the polyurethane polymer formed in the emulsion by a reaction between the isocyanate and aliphatic diol. The process takes place directly and does not need any pH adjustment or temperature adjustment to initiate the polymerization reaction.

In an aspect, the pH of the formulation is maintained within a range of 5.0 to 6.5.

In an aspect, the process ensures least amount of free or un-encapsulated pyrethroid insecticide as compared to other processes known in the art, which in turn decreases the toxicity of the formulation.

It should be understood however that said aqueous and organic phases are not particularly limiting. The interfacial polymerization reactions suitable for encapsulated formulations may be prepared by reaction between the wall forming components present in two substantially immiscible liquids, of which said organic and aqueous phases constitute a preferred embodiment. Moreover, the two walls forming components may be either same or different.

Therefore, another aspect provides a process for encapsulating lambdacyhalothrin, said process comprising:
a. preparing an organic phase comprising lambdacyhalothrin solubilized in soyabean oil and at least one isocyanate;
b. preparing an aqueous phase comprising water, and a protective colloid;
c. mixing the aqueous and organic phases to form an oil in water emulsion; and
d. adding at least one polyamine to said oil-in-water emulsion to trigger an interfacial condensation between said isocyanates in the organic phase with the amine in the aqueous phase to form a polymeric shell wall.

In an aspect, the aqueous phase comprises at least one aliphatic diol added prior to emulsification. In this aspect, the isocyanates in the organic phase also react with the aliphatic diol to form the polyurethane shell wall, which crosslinks with the polyurea shell wall.

In a further preferred aspect, the polyurea polymeric shell wall is formed by a self-condensation reaction of a polyisocyanate wall forming component. In this aspect, the process for the preparation of the capsule suspension formulation comprises establishing a physical dispersion of an organic phase in the aqueous phase. In this aspect, the organic phase comprises the organic isocyanate intermediate such as hereinabove described along with the lambdacyhalothrin solubilized in soyabean oil.

The organic phase may also contain an isocyanate that may be selected form tetramethylene diisocyanate, pentamethylene diisocyanate, hexamethylene diisocyanate, toluene diisocyanate, diphenylmethene-4,4'-diisocyanate, polymethylene polyphenyl isocyanate (with 3 or more isocyanate groups), 2,4,4'-diphenyl ether triisocyanate, 3,3'-dimethyl-4,4'-diphenyl diisocyanate, 3,3'-dimethoxy-4,4'-diphenyl diisocyanate, 1,5-naphthylene diisocyanate and 4,4'4"-triphenylmethane triisocyanate. The most preferred being polymethylene polyphenylisocyanate with 3 or more isocyanate groups. The polymetheylene polyphenylisocyanate in the organic phase reacts with the amines added during the polymerization step to form very thin polyurea polymers.

In an aspect, the polyphenylisocyanate monomers react with the aliphatic diol to form polyurethane polymers in trace amounts, both the polymers then interact to form thin walled capsules.

The amount of isocyanates added is not particularly limiting and may be determined by a skilled artisan. In an embodiment, the amount of isocyanates utilized is such that it leads to the formation of between 1% to 2.5% wall thickness, which corresponds to 0.8% to 2% of isocyanates respectively in the organic phase. However, wall thicknesses above 2.5%, preferably 5% or 10% are not excluded and may be prepared conventionally as known in the art.

It is known in the art that the percentage of isocyanates added and the ratio of the pre-polymers decides the thickness of the shell wall. It has surprisingly been found that by departing from the prior art and adding a single isocyanate such as polymethlene polyisocyanate results in the formation of very stable and thin walled capsules that demonstrate an excellent release profile. A single isocyanate is added in appropriate percentages in co-relation to the percentage of the pyrethroid insecticide to be encapsulated. Isocyanates themselves may contribute to toxicity of the formulation. Therefore a decrease in the amount of isocyanates in the formulation results in the overall decrease in the toxicity of the formulation.

In other aspects, the microcapsules may also be used to encapsulate other classes of insecticides as well as other classes of agrochemicals such as herbicides, fungicides, and biocides.

The aqueous phase may contain a protective colloid to enhance the stability of the oil in water emulsion against aggregation or shear when the emulsion is formed. The protective colloid may be selected from those substances that can absorb insoluble particles, increase the strength of the layer formed around the suspended particles of the actives and prevent recombination of particles during polymerization. Such substances can be selected from a wide range of materials such as alkylated vinyl copolymers, polyacrylamides, graft copolymer of polyvinyl alcohol, methyl vinyl ether/maleic acid, polyacrylates, methylcellulose, polyvinyl alcohol, polyacrylamide, and poly (methylvinyl ether/maleic anhydride).

In an aspect, the aqueous phase also essentially contains aliphatic diols. Such aliphatic diols may include monopropylene glycol, dipropylene glycol, tripropylene glycol, triethylene glycol, tetraethylene glycol, diethylene glycol and ethylene glycol, most preferred being monopropylene glycol. Monpropylene glycol has been known to be added to most formulations as an antifreeze subsequent to the encapsulation step. The aliphatic diol plays a major role in polymerization and emulsification stages when added prior to emulsification. Surprisingly it has been found, that aliphatic diols also react in trace amounts with the isocyanate in the organic phase to form polyurethane polymers. These polymers crosslink with the polyurea polymers formed in the polymerization stage to form thin walled capsule shell around the active ingredient to be encapsulated. Another surprising finding is that the aliphatic diols such as monopropylene glycol enable the formation of a very fine dispersion without the use of a dispersing agent. When said diol is added in excess, any unreacted glycol acts as an antifreeze agent as well. Monoproplyene glycol is the least toxic as compared to other diols and is more environmentally friendly, with studies indicating that no long term damage is caused due to monopropylene glycol.

In an aspect, the aliphatic diol, when present, may be added in about 50% by weight in the aqueous phase. However, the amount of the aliphatic diol present within the formulation is not particularly limiting and greater and/or smaller amounts of the diol could be conveniently used by a person skilled in the art.

The amines which react with the isocyanates may be selected form ethylenediamine, propylene-1, 3-diamine, tetramethylenediamine, pentamethylenediamine, 1,6-hexamethylenediamine, diethylenetriamine, triethylenetetramine, tetraethylenepentamine, pentaethylenehexamine, 4,9-dioxadodecane-1, 12-diamine, 1,3-phenylenediamine, 2,4- and 2,6-toluenediamine and 4,4'-diaminodiphenylmethane or acid addition salt thereof. The preferred polyamine is selected from ethylenediamine, diethylenetriamine or a combination thereof.

In an aspect, the amount of poylamines utilized is not particularly limiting and may vary depending on the amount of polyisocyanates utilized.

The thickness of the polymeric shell wall is defined conventionally as the mass ratio of the monomeric pre-polymers to the total amount of the active material and the organic solvent present within the formulation. Preferable is a thin walled microcapsules formulation, which ensures a rapid release of the encapsulated pyrethroid insecticide. The thin walls could be obtained with low content of pre-polymers (isocyanate + amines) corresponding to 2.5% and 1% of thickness wall. However, it should be understood that polyurea-polyurethane capsules with higher thickness wall (5%, 10% or more) are not excluded.

The process of preparing the microencapsules comprises of the following steps:
Step a comprises preparing an organic phase which may contain the vegetable oil or derivatives thereof, which is used to solubilize the pyrethroid insecticides, the pyrethroid insecticide which is to be encapsulated, and the isocyanates preferably polymethylene polyhenylisocyanates with 3 or more isocyanate groups.

Step b comprises preparing an aqueous phase containing a protective colloid, and water. In an embodiment, the aqueous phase may also comprise an aliphatic diol.

Step c comprises mixing the organic and aqueous phase to form an oil in water emulsion by adding the organic phase to the aqueous phase and applying a high shear. The emulsion formed is stabilized due to presence of a protective colloid.

Step d comprises addition of the amines to the emulsion so as to enable polymerization of the amine monomers with the isocyante to form a polyurea polymer.

In an aspect, simultaneously the aliphatic diol, preferably monopropylene glycol, in the aqueous phase reacts with trace amounts of isocyanates to form a polyurethane polymer. Both the polymers crosslink to form a polyurethane-polyurea polymer capsules.

In an aspect, the polyurethane polymer along with the polyurea polymer crosslink to form a thin walled microcapsule that has a size of D₅₀ between 0.1 and 10 µm. The preferred average size of the microcapsules obtained is between 0.1 to 5 µm and most preferred size of the microcapsules being 0.1 to 4 µm. The polyurethane polyurea cross linked shell wall is more stable and can endure higher mechanical stress. Also, the rate of free active in the formulation is very less as compared to other commercially available formulations, thus the toxicity of the formulation is decreased.

The added advantage of the process is that there is very little need to adjust the pH of the emulsion. Also, controlled temperature adjustments that are most critical in other interfacial polymerization techniques mentioned in the prior art are not required in the process mentioned above.

Other optional ingredients that may be added to the formulation post polymerization include surfactants, dispersants, antifoam, thickeners, biocides and other such additives that may be added in a formulation.

Surfactants may be optionally added post polymerization, preferably an anionic or non-ionic surfactant with HLB range about 12-16 that is high enough to form stable oil/water emulsion. Suitable surfactants include, but are not limited to, polyethylene glycol ethers of linear alcohol, ethoxylated nonyl-phenol, naphthalene sulphonates, salts of long chain alkyl benzene sulphonate, block-co-polymers of propylene oxide and ethylene oxide, and anionic/nonionic blends.

Dispersants include salts of polyacrylic acids, salts of lignosulphonic acids, salts of phenylsulphonic or naphthalenesulphonic acids etc.

The microcapsules obtained by the process described above have many distinct advantages. Firstly the microcapsules have very thin walls that are ideal for quick release formulations and for active ingredients such as pyrethroid insecticides that are highly toxic and remain in the environment for short periods of time, such as foliar applications.

The microcapsules prepared by the technique discussed above may be suspended in a liquid or otherwise diluted with water to be sprayed in the form of tank mixes with other actives or directly onto foliar crops. The liquid may be water which acts as a diluent or a second agrochemical active. Alternatively, more than one active ingredient can be encapsulated using the process discussed above.

It was surprisingly found that formulations with aliphatic diol such as monopropylene glycol added in the aqueous phase had a finer granulometry and thinner walls as compared to those formulations where no aliphatic diol was added in the aqueous phase.

The capsule suspension is combined with the second insecticide that is not encapsulated.

The second active ingredient is present as a suspension concentrate, which when combined with the capsule suspension of the pyrethroid insecticide, forms a ZC formulation.

The second formulation is a suspension concentrate comprising novaluron.

Thus, this aspect provides a formulation comprising:
(a) microencapsulated formulation comprising lambdacyhalothrin solubilized in soyabean oil the solubilized pyrethroid insecticide being encapsulated in a capsule having a polymeric shell wall; and
(b) a suspension concentrate comprising novaluron.

While developing a formulation comprising benzoylurea and pyrethroids, one of the biggest challenge is to stabilize the formulation. Conventional way to develop formulation of benzoylurea and pyrethroids is to prepare emulsifiable concentrate (EC). However, high loading of benzoylurea is not possible in such EC formulations. Another formulation option could be a suspension concentrate (SC) of benzoylurea and pyrethroids. But such SC formulation does not address safety issues related to pyrethroids exposure to human skin. Also, another way to develop a formulation of benzoylurea and pyrethroids is to prepare individual formulations of benzoylurea and pyrethroids respectively and then combine these two formulations to obtain the co-formulation. When such co-formulation is developed, solvents used in formulating pyrethroids interacts with benzoylurea formulation and results in thickening of the benzoylurea formulation.

Surprisingly, it has now been found that a capsule suspension formed by encapsulating lambdacyhalothrin suspended in soyabean oil results in stable co-formulation when mixed with suspension concentrate of novaluron Such co-formulation is also known as ZC formulation. Soyabean oil does not interact with the solvent phase of the novaluron and results into a stable co-formulation of lambdacyhalothrin (knock-down insecticide) and novaluron (long-term insecticide).

The encapsulation of pyrethroids with protective coating or shell prevents skin exposure causing paranaesthesia (hyperactivity of cutaneous sensory nerve fibers leading to skin irritation). The protective coating of pyrethroids ruptures at the time of desired action.

According to another aspect, the liquid agrochemical formulation comprises from about 1% to about 60% and preferably from about 1% to about 50% of novaluron of the total weight of the stable co-formulation.

In a preferred aspect, benzoylurea comprises from about 1% to about 40% of the total weight of the co-formulation.

According to another aspect, the co-formulation comprising novaluron in the form of mill base or suspension concentrate.

According to another aspect, the co-formulation comprises from about 0.1% to about 60% and preferably from about 1% to about 50% of lambdacyhalothrin of the total weight of the co-formulation.

In a preferred aspect, pyrethroids comprises from about 1% to about 40% of the total weight of the co-formulation.

According to another aspect, the encapsulated formulation comprising pyrethroids microcapsules may be suspended in water to form capsule suspension.

According to another aspect, the polymers used in preparing capsule wall of the encapsulated pyrethroids are selected from the group comprising polyureas, polyurethanes, polyesters, polyamides, polycarbonates or urea/formaldehyde polymers. Preferred polymer used in preparing capsule wall of the encapsulated pyrethroids is polyurea.

According to another aspect, the polymers used in preparing capsule wall of the encapsulated pyrethroids are obtained by interfacial polymerization or self-polymerization of polyisocyanate.

According to another aspect, monomer units used to bring out interfacial polymerization are selected from group comprising of aliphatic polyisocyanate, an aromatic polyisocyanate or a mixture thereof. Examples of suitable isocyanate compounds, include, but are not limited to polymethylene polyphenylene isocyanate (PMPI), methane diphenyl diisocyanate (MDI), hexamethylene diisocyanate (HDI), isophorone diisocyanate (IPDI), toluene diisocyanate (TDI) (any of the five possible isomers thereof, for example, 2,4-TDI toluene diisocyanate or 2,6-toluene diisocyanate), 1,5-naphthalene diisocyanate (NDI), 1,4-phenylene diisocyanate (PDI), hexahydrotoluylene diisocyanate (H6TDI), hydrogenate MDI, trimethyl hexamethylene diisocyanate, tetramethyl xylylene isocyanate, tetramethyl xylylene diisocyanate, xylylene diisocyanate, isocyanate dimers, isocyanate trimers, polyisocyanates, polydiisocyanates and combinations thereof. In accordance with the above, in some embodiments the isocyanate is an unblocked compound/monomer, for example, unmodified methane diphenyl diisocyanate (MDI), hexamethylene diisocyanate (HDI), isophorone diisocyanate (IPDI), or toluene diisocyanate (TDI).

When the polyisocyanate is in the form of a mixture of aliphatic and aromatic polyisocyanates, the at least one aliphatic polyisocyanate and the at least one aromatic polyisocyanate are preferably used in a respective molar ratio comprised between 100:1 and 1:100 and more preferably between 100:1.5 and 100:6. Such molar ratio is defined as the average molecular weight of aliphatic polyisocyanate and aromatic polyisocyanate.

According to another aspect, polyfunctional amines to bring out interfacial polymerization are selected from the group comprising of polyfunctional amines include hexamethylenediamine, hexamethylenediamine, ethylenediamine (EDA), 1,3-diaminopropane, 1, 4-diamino-butane, diethylenetriamine (DETA), pentaethylenehexamine, bis(3-aminopropyl)amine, bis(hexanethyl-ene)triamine, tris(2-aminoethyl)amine, triethylene-tetramine (TETA), N,N'-bis(3-aminopropyl)-1,3-propanediamine, tetraethylenepentamine, amino-2-methyl-1-propanol, a second branched polyethylenimine, chitosan, 1,3-diamino-guanidine, 1,6-hexanediamine (HAD), 1,1-dimethylbiguanide, and guanidine. Suitable amino acids/peptides include arginine, lysine, histidine, ornithine, nisin and gelatin. and/or mixtures thereof. Preferred polyfunctional amine is EDA.

According to another aspect, the co-formulation comprising pyrethroids in the microencapsulated form suspended in the aqueous phase wherein average particle size of the microcapsules have a diameter 0.1 µm to 10 µm, preferably, 1 µm to 3 µm.

In another aspect, the liquid agrochemical formulation comprises one or more solvent.

According to another aspect, the liquid agrochemical formulation comprises from about 0.1% to about 50% and preferably from about 0.2% to about 40% of solvent of the total weight of the liquid agrochemical formulation.

In a preferred aspect, solvent comprise from about 0.5% to about 30% of the total weight of the liquid agrochemical formulation.

In another aspect, the liquid agrochemical formulation comprises one or more nonionic and anionic surfactant or dispersing agents.

Suitable nonionic surfactants or dispersing agents include all substances of this type that can normally be used in pesticidal formulations. Non-ionic dispersing agents include but not limited to phosphate esters of tristyrylphenol ethoxylates, ethoxylated triglycerides, ethoxylated aliphatic alcohols, trisiloxane ethoxylate (SILWET 408), polyalkylene oxide block copolymers of a simple primary alcohol (e.g. ethylene oxide-propylene oxide block copolymers of butanol) such as Atlas^{™} G-5000, Termul^{™} 5429 or Tergitol^{™} XJ, XD or XH; polyisobutene succinic anhydride-polyethylene glycol such as Atlox^{™} 4914; polyoxyethylenepolyoxypropylene (EO/PO) block copolymers (e.g., PLURONIC F108, ATLOX 4912, ATLAS G-5000, SYNPERONIC PE Series copolymers) and ethylene oxidepropylene oxide based acrylic acid graft copolymers such as methyl methacrylate graft copolymers (e.g., ATLOX 4913).

According to an aspect, the liquid agrochemical formulation comprises from about 0.1% to about 30% and preferably from about 0.5% to about 20% of nonionic surfactant or dispersing agent of the total weight of the co-formulation.

Anionic dispersing agents include but not limited to alkylnaphthalene sulfonates and their formaldehyde condensates (e.g., MORWET D425), polyalkylaryl sulfonates (e.g., SUPRAGIL MNS90), polymerized fatty acids (e.g., ATLOX LP-1 (12-hydroxyoctadecanoic acid homopolymer, octadecanoate), ricinoleic acid homopolymer), lignin sulfonates (e.g., ammonium lignosulfonate or sodium lignosulfonate such as BORRESPERSE NA), sodium dodecylbenzene sulfonate (Rhodacal^{®} DS-10), polyphenol sulfonates and the salts of polyacrylic acids. A further preferred group of anionic surfactants or dispersants includes the following salts that are of low solubility in vegetable oil: salts of polystyrenesulphonic acids, salts of polyvinylsulphonic acids, salts of naphthalenesulphonic acid-formaldehyde condensation products, salts of condensation products of naphthalenesulphonic acid, phenolsulphonic acid and formaldehyde, and salts of lignosulphonic acid.

According to an aspect, the co-formulation comprises from about 0.1% to about 30% and preferably from about 0.5% to about 20% of anionic surfactant or dispersing agent of the total weight of the co-formulation.

In another aspect, the co-formulation comprises one or more viscosity modifying agents.

Suitable viscosity modifying agents include but are not limited to glycerine, KELZAN^{®}, carrageenan, xanthan gum (Rhodopol 23), guar gum, gum Arabic, gum tragacanth, polyox, alginin, attapulgite clays, smectite clays (Attagel 50, Van-Gel B), precipitated silica and sodium alginate. Xanthan gum is particularly preferred.

The total concentration of viscosity modifying agents in the co-formulation may comprise between 0.01% and 15% of the total co-formulation, more preferably 0.1-5% (w/w).

In another aspect, the co-formulation comprises one or more anti-freeze agents.

Suitable anti-freeze agents include but are not limited to ethylene glycol, 1 ,2-propylene glycol, 1 ,3-propylene glycol, 1 ,2-butanediol, 1 ,3-butanediol, 1 ,4-butanediol, 1 ,4-pentanediol, 3- methyl-1 ,5-pentanediol, 2,3-dimethyl-2,3-butanediol, trimethylol propane, mannitol, sorbitol, glycerol, pentaerythritol, 1 ,4-cyclohexanedimethanol, xylenol, bisphenols such as bisphenol A or the like. In addition, ether alcohols such as diethylene glycol, triethylene glycol, tetraethylene glycol, polyoxyethylene or polyoxypropylene glycols of molecular weight up to about 4000, diethylene glycol monomethylether, diethylene glycol monoethylether, triethylene glycol monomethylether, butoxyethanol, butylene glycol monobutylether, dipentaerythritol, tripentaerythritol, tetrapentaerythritol, diglycerol, triglycerol, tetraglycerol, pentaglycerol, hexaglycerol, heptaglycerol, octaglycerol and the like. Propylene glycol is particularly preferred.

In an aspect, the aliphatic diol, when added to the aqueous phase, may also act as the anti-freezing agent when added in such quantities.

The total concentration of anti-freeze agents in the co-formulation may comprise between 0.01% and 30% of the total co-formulation, more preferably 0.1-20% (w/w).

In another aspect, the co-formulation comprises one or more defoaming agents.

Suitable defoaming agents include but are not limited to mixtures of silica, silicone oil (for example DC-200, SAG-470, SAG-1572), polydialkylsiloxanes (Rhodorsil^{®} 416 or Rhodosil^{®} 454) combination of polydimethylsiloxanes and perfluoroalkylphosphonic / perfluoroalkylphosphinic acids. Silicone oils are particularly preferred.

The total concentration of defoaming agents in the co-formulation may comprise between 0.01% and 15% of the total co-formulation, more preferably 0.1-5% (w/w). In another aspect, the co-formulation comprises one or more wetting agents.

Suitable wetting agents are selected from the group comprising of silicone surfactants, such as Silwet copolymers (Silwet 408, Silwet L-8600, Silwet L-77, Silwet L-7657, Silwet L-7650, Silwet L- 7607, Silwet L-7604, Silwet L-7600, Silwet L-7280 and mixtures thereo), organo amine surfactants (amine oxide surfactants, dodecyl dimethyl amine oxide, tetradecyl dimethyl amine oxide, hexadecyl dimethyl amine oxide and mixtures thereof), lignosulfonates, sulfonates, sulfates and combinations thereof, organosilicate surfactants, methylated or ethylated seed oils, ethoxylates, organomodified siloxanes and acetylene glycol surfactants. Silicone wetting agents are particularly preferred.

The total concentration of wetting agents in the co-formulation may comprise between 0.01% and 15% of the total co-formulation, more preferably 0.1-5% (w/w). In another aspect, the co-formulation comprises one or more biocidal agents.

Suitable biocidal agents are selected from the group comprising of 1,2-benzisothiazolin-3-one (BIT), 1-(3-chloroallyl)-3,5,7-triaza-1-azonia-adamantane chloride, 1,2- benzisothiazolin-3-one, 5-chloro-2-methyl-3(2H)-isothiazolone and 2-methyl-3(2H)- isothiazolone mixtures (CMIT/MIT) or the individual actives, glutaraldehyde, 3-iodo-2- propynyl butyl carbamate (IPBC), octyl isothiazolinone (OIT), dichlorooctylisothiazolinone (DCOrr), 2-bromo-2-nitro-1,3-propanediol (bronopol), 2,2-dibromo-3-nitrilopropionamide (DBNPA), bromonitrostyrene (BNS), chlorothalonil, a β tubulin inhibitor such as carbendazim and thiabendazole, diiodomethyl-p-tolylsulfone (DIMTS), a triazine-based biocide such as terbutryn, cybutryn, or prometryn, a dimethylurea-based biocide such as diuron, isoproturon, chlorotuloron, or fluometuron, an azole such as propiconazole, difenoconazole, cyproconazole, or tebuconazole, tetrakis (hydroxymethyl) phosphonium sulfate (THPS), 2,2-dibromo-3-nitrilopropionamide (DBNPA), tri n-butyl tetradecyl phosphonium chloride (TPC), 2-(thiocyanomethylthio) benzothiazole (TCMTB), a pyrithione such as zinc pyrithione, a formaldehyde-releasing biocide, an acetaldehyde-releasing biocide such as 2,6-dimethyl-m-dioxan-4-ol acetate, or phenolic biocide such as ortho-phenyl phenol or Triclosan. Dipropylene glycol solution of 1,2-benzisothiazolin-3-one is particularly preferred.

The total concentration of wetting agents in the co-formulation may comprise between 0.001% and 10% of the total co-formulation, more preferably 0.01-5% (w/w).

According to the present invention, there is provided a co-formulation comprising encapsulated lambda-cyhalothrin, novaluron and soyabean oil.

According to specific embodiments a co-formulation of the present invention may comprise from about 0.1% to about 60% w/w of encapsulated lambda-cyhalothrin, from about 1% to about 60% w/w of novaluron, from about 0.1% to about 50% w/w of vegetable oil.

A process for preparation of stable co-formulation comprising novaluron and lambdacyhalothrin solubilized in soyabean oil and encapsulated in a polymeric shell wall.

According to an aspect, a process for the preparing co-formulation comprises:
a. preparing a novaluron suspension concentrate formulation;
b. preparing an encapsulated lambdacyhalothrin formulation; and
c. preparing a co-formulation by mixing suspension concentrate of novaluron and lambdacyhalothrin.

According to an aspect, a process for the preparing co-formulation comprises:
Step 1: Preparation of novaluron suspension concentrate formulation:
   - mixing novaluron and other necessary formulation excipients with water to obtain the mixture;
   - milling the mixture to achieve desired particle size;
Step 2: Preparation of lambdacyhalothrin formulation:
   - preparing an aqueous phase comprising at least a surfactant, and optionally an aliphatic diol;
   - preparing an oil phase comprising lambdacyhalothrin
   - adding oil phase to the aqueous phase to obtain fine dispersion.
Step 3: Preparation of co-formulation of novaluron and lambdacyhalothrin
   - mixing the novaluron suspension concentrate formulation of step 1 and the lambdacyhalothrin formulation of step 2 to obtain the co-formulation.

According to an aspect, a process for the preparing co-formulation comprises:
a. Preparation of novaluron suspension concentrate formulation;
b. Preparation of encapsulated lambdacyhalothrin formulation;
c. Preparation of co-formulation by mixing suspension concentrate of novaluron and encapsulated lambdacyhalothrin.

According to an aspect, a process for the preparing co-formulation comprises:
Step 1: Preparation of novaluron suspension concentrate formulation:
   - mixing novaluron and other necessary formulation excipients with water to obtain the mixture;
   - milling the mixture to achieve desired particle size;
Step 2: Preparation of encapsulated lambdacyhalothrin formulation:
   - preparing an aqueous phase comprising at least a surfactant, and optionally an aliphatic diol;
   - preparing an oil phase comprising lambdacyhalothrin and isocyanic monomeric reactant;
   - adding oil phase to the aqueous phase and then adding polyfunctional amines to obtain polyurea microcapsules.
Step 3: Preparation of co-formulation of novaluron and encapsulated lambdacyhalothrin
   - mixing the novaluron suspension concentrate formulation of step 1 and the encapsulated lambdacyhalothrin formulation of step 2 to obtain the co-formulation.

According to another aspect, a process for the preparing co-formulation comprises:
Step 1: Preparation of novaluron suspension concentrate formulation:
   - mixing novaluron and other necessary formulation excipients with water to obtain the mixture;
   - milling the mixture to achieve desired particle size;
Step 2: Preparation of encapsulated lambda-cyhalothrin formulation:
   - preparing an aqueous phase comprising at least a surfactant, and optionally an aliphatic diol;
   - preparing an oil phase comprising a lambda-cyhalothrin and isocyanic monomeric reactant;
   - adding oil phase to the aqueous phase and then adding polyfunctional amines to obtain polyurea microcapsules of lambda-cyhalothrin.
Step 3: Preparation of co-formulation of novaluron and lambda-cyhalothrin:
   - mixing the novaluron suspension concentrate formulation of step 1 and the encapsulated lambda-cyhalothrin formulation of step 2 to obtain the co-formulation.

An aspect provides the use of stable co-formulation as pests control solution especially imparting insecticidal, nematicidal, acaricidal or molluscicidal activity.

In another aspect, the present invention provides a method of controlling or preventing unwanted pests, said method comprising applying an effective amount of co-formulation according to the present invention to the pests or to their locus.

In an aspect, the stable co-formulation are used as pesticide for insecticidal, nematicidal, acaricidal or molluscicidal activity.

In an aspect, the stable co-formulation are used in professional, domestic, veterinary, ectoparasitic, public hygiene and agriculture purpose.

According to an aspect, the stable co-formulation is used for the protection of crops, including but not limited to, insects causing damage in edible crops such as, for example, wheat, rice, soybean, maize, sugarcane, potato, tomato, pome fruits, stone fruits, citrus, grapevines and vegetables and non-edible crops such as cotton, ornamental crops, cash crops, horticultural crops, amenities and forest trees.

According to another aspect, the stable co-formulation provides the possibility of control of insects showing complete and incomplete metamorphosis.

According to another aspect, the stable co-formulation provides the possibility of control over Lepidoptera, Arachnida, Hemiptera, Bilateria, Hymenoptera, Coleoptera, Diptera, Anoplura, Hymenoptera and all the other insect orders.

According to another aspect, a method of controlling or preventing unwanted pests on professional, domestic, public hygiene and agriculture purpose; said method comprising applying an effective amount of the co-formulation to the pests or to their locus.

Thus, an aspect may provide methods of controlling or preventing unwanted pests on professional, domestic, public hygiene and agriculture purpose, said method comprising application of an effective amount of the co-formulation comprising:
a) novaluron
b) lambdacyhalothrin and
c) soyabean oil solvent.

Another aspect may provide methods of controlling or preventing unwanted pests on professional, domestic, public hygiene and agriculture purpose.

An aspect may provide methods of controlling insect pest belong to Lepidoptera, Arachnida, Hemiptera, Bilateria, Hymenoptera, Coleoptera, Diptera, Anoplura, Hymenoptera and all the other insect orders.

The formulations of the present invention may be sold as a pre-mix composition or a kit of parts such that individual lambdacyhalothrin and/or novaluron formulations may be mixed before spraying.

Therefore, an aspect provides a kit comprising a microencapsulated formulation comprising a lambdacyhalothrin solubilized in soyabean oil, the solubilized pyrethroid insecticide being encapsulated in a capsule having a polymeric shell wall.

An aspect provides a kit comprising:
a. microencapsulated formulation comprising lambdacyhalothrin solubilized in soyabean oil, the solubilized pyrethroid insecticide being encapsulated in a capsule having a polymeric shell wall; and
b. a suspension concentrate comprising novaluron insecticide.

The following examples illustrate the invention.

### Example 1: Polyurea capsule with 2.5% thickness wall:

Organic Phase:
   a.) Active - lambda cyhalothrin (97% purity) - 180.7 g
   b.) Soybean oil -150.1g
   c.) PMPI - 6.8 g
Aqueous Phase:
   a.) Water - 227 g
   c.) Co-Solvent - Monopropylene glycol - 270.55 g

The above composition was prepared by following the present encapsulation process as follows:
Step a.: The organic phase was prepared by introducing 180.7 g of technical lambda cyhalothrin (97% purity) and 150.1g of soybean oil into a tank equipped with a stirrer. After the lambda cyhalothrin was dissolved 6.8 g of PMPI was added to obtain 337.8 g of organic phase.
Step b.: The aqueous phase was prepared by mixing 227 g of hot water in a tank equipped with a stirrer. 1.0 g of a biocide/preservative and 267 g of propylene glycol (co-solvent) were successively introduced. At the end a clear aqueous phase was obtained.
Step c.: The emulsion was obtained by introducing 215 g of aqueous phase into a vessel equipped with a high shear stirrer and a faucet at the bottom. The stirrer was switched on with a low rotational speed and 160 g of organic phase was added to the cylinder, after which the speed of the stirrer was increased to the maximum during 1 minute.
Step d.: The polymerization reaction was carried out by adding the emulsion formed in step c to a stirred reactor container to which 3.1g of water, 1.5 g of ethylene diamine and 1.7g of diethylenetriamine were added to the emulsion. After 1 hour with stirring the microencapsulated suspension created was measured for its granulometry. The diameter of the microcapsule was 1.7µm.

The microencapsulated suspension obtained was stirred for one hour and 3.5 g concentrated neutralizing acid solution was added. At the end of neutralization, 382 g of capsules suspension was obtained.

It was found that the microcapsules obtained from the formulation prepared without an aliphatic diol showed a granulometry of 13 µm with low spreadability. Microcapsules obtained from the formulation prepared, which contained aliphatic diol, monopropylene glycol showed a granulometry of 1.7 µm and even spreadability.

### Example 2 polyurea capsule with 1% thickness wall:

Organic Phase:
   a.) Active - lambda cyhalothrin (97% purity) - 180.1 g
   b.) Soybean oil -150.3g
   c.) Isocyanate (PMPI) - 2.69 g
Aqueous Phase:
   a.) Water - 228 g
   b.) Monopropylene glycol - 271.9 g
   c) Preservative - 4.70 g

The above composition was prepared by following the present encapsulation process as follows:
Step a.: The organic phase was prepared by introducing 180.1 g of technical lambda cyhalothrin (97% purity) and 150.3g of soybean oil into a tank equipped with a stirrer. After the lambda cyhalothrin was dissolved, 2.69 g of PMPI was added to obtain 333.1 g of organic phase.
Step b.: The aqueous phase was prepared by taking 228 g of hot water in a tank equipped with a stirrer. 271.9 g of propylene glycol was introduced. At the end, obtained a clear aqueous phase.
Step c.: The emulsion was obtained by introducing 216 g of aqueous phase into a cylinder equipped with a high shear stirrer and a faucet at the bottom. The stirrer was switched on with a low rotational speed and 160 g of organic phase was added to the cylinder, after which the speed of the stirrer was increased to the maximum during 1 minute.
Step d.: The polymerization reaction was carried out by adding the emulsion formed in step c to a stirred reactor container to which 1.25g of water, 0.58g of ethylene diamine and 0.66g of diethylenetriamine were added to the emulsion. After 1 hour with stirring the microencapsulated suspension created was measured for its granulometry. The diameter of the microcapsule was 1.7µm.

### Comparative Examples:

Example 3: A sample prepared using the formulation and process in example 1 was compared with commercially available encapsulated quick release Lambda Cyhalothrin CS formulations (herein Sample 1) to study its release profile:

| Sample | Total content | % released after | | |
|---|---|---|---|---|
| | (%) | 15 min | 30 min | 180 min |
| Example 2 | 9.74 | 48.0 | 74.0 | 104.0 |
| Sample 1 | 9.6 | 93.0 | 98.0 | 98.0 |

The release rate of the technical lambda-cyhalothrin was measured in laboratory conditions using the recommended method used to measure the active ingredient release from capsules, which is described in: Release of lambda cyhalothrin (MT 190, CIPAC Handbook L, p.140, 2006).

It was observed that the release profile of Example 2 demonstrated desired release of the active. Greatest diffusion was achieved at 180 minutes. It was found that 48% of the active ingredient was released in the initial stage and the highest release rate was observed at 180 minutes.

### Example 4:

Free content of the active ingredient was measured for example 3. The free content of the active in this formulation was compared with the free content of the active ingredient in the commercially available lambda cyhalothrin quick release CS formulations named sample 1 and sample 2, which are known in the art.

| Sample | Total content | Free content |
|---|---|---|
| | (%) | (relative) (%) |
| Example 2 | 9.74 | 0.4 |
| Sample 1 | 9.6 | 5.2 |
| Sample 2 | 9.8 | 3.0 |

It was observed that the free content in the formulation of example 3 had relative free content of 0.4% as compared to the commercially available samples 1 and 2, which had much higher free active ingredient content.

### Examples 5,6:

Using the process described in the examples 1 and 2, the following formulations were prepared:

| S No. | Parameter/ Components | Examples 5 (23 CS) | Example 6 (9.6 CS) |
|---|---|---|---|
| 1 | Wall thickness | 1% | 3.76% |
| 2 | Lambda Cyhalothrin 23.5@95% | 24.737 | 10.7368 |
| 3 | Soybean oil | 15.000 | 10.000 |
| 4 | PMPI | 0.010 | 0.0210 |
| 5 | HMDI | 0.286 | 0.5780 |
| 6 | Water | 41.898 | 45.9741 |
| 7 | EDA | 0.158 | 0.470 |
| 8 | Mono-propylene glycol | 6.000 | 22.000 |
| 9 | Surfactants, defoamer, neutralizing acid, biocide and preservative | 11.91 | 10.22 |

### Example 7, Preparation of 100 g/L capsule suspension:

200 g water was weighed in a beaker. 21.25 g of a dispersing agent was added under stirring and 113.8 g of an aqueous solution containing 1.5% w/w of xanthan gum and 1.35% of a biocide was added. When the solution was clear and homogenous, 99.3 g of mono-propylene glycol was added. The water-alcoholic solution was added in 371.4 g of the suspension of capsule obtained at the end of example 3. 43.9 g water was added to complete the formulation. 0.34 g of a defoamer was added to obtain 850 g of a capsule suspension with lambda-cyhalothrin content equal to 100 g/L and a density equal to 1.05.

### EXAMPLE 8:

The stable co-formulation was made according to following procedure:
1. Preparation of Lambda-cyhalothrin 24% Capsule Suspension (CS):
Organic phase was prepared by dissolving Lambda-cyhalothrin technical in soyabean oil, and isocyanate monomer was then added subsequently. The organic phase thus obtained was kept aside. Aqueous phase was prepared by dissolving propylene glycol and pluronic P-104 in water. Aqueous phase thus prepared was kept aside. Separately, a solution of ethylene diamine was prepared in water. Aqueous phase was stirred to homogenize the contents and organic phase was added to it; followed by addition of ethylene diamine solution under gentle stirring. The mixture thus obtained is heated to 1-1.5 hours at 55-60°C with stirring. After that, adjustment made to pH 5-6 followed by the addition of 2% xanthum gum to finally obtain Lambda-cyhalothrin CS.
**2. Preparation of Novaluron 50-51% Mill base:**
Novaluron 50-51% concentrate mill base slurry was prepared by adding sodium lignosulphonate, antifoam and Novaluron tech in water. Slurry so obtained was then milled to achieve particle size of 8-10 µm (D₉₀).
**3. Preparation of Lambda-cyhalothrin- Novaluron ZC:**
Lambda-cyhalothrin CS obtained in step 1 and Novaluron mill base obtained in step 2 is mixed together; followed by addition of other necessary excipients under gentle stirring condition to obtain Lambda-cyhalothrin-Novaluron ZC as the final co-formulation according to the present invention. The example-1 is further illustrated as:

| **Ingredients** | **Quantity (%)** |
|---|---|
| **Lambda-cyhalothrin 24% Capsule Suspension (CS)** | |
| Lambda-cyhalothrin Technical | 24.74 |
| Soyabean oil | 17 |
| Isocyanate monomers | 0.63 |
| Propylene glycol | 11 |
| Pluronic P 104 | 2.5 |
| Ethylene diamine | 0.33 |
| Xanthan gum | 0.2 |
| Water | q.s |
| Total | 100 |

| **Novaluron 51% Mill base** | |
|---|---|
| Novaluron Technical | 52.61 |
| Sodium lignosulphonate | 10.50 |
| Antifoaming agent | 0.50 |
| Water | q.s. |
| Total | 100 |

| **Lambda-cyhalothrin-Novaluron ZC** | |
|---|---|
| Lambda-cyhalothrin 24% Capsule Suspension | 26.5 |
| Novaluron 51% Mill base | 63.9 |
| Xanthum gum | 0.1 |
| Silwet 408 | 3.50 |
| Water | q.s. |

The ZC formulation of Example 1 results into novaluron 370g/L and lambda-cyhalothrin 70g/L.

### EXAMPLE 9

| **Lambda-cyhalothrin-Novaluron ZC** | |
|---|---|
| Lambda-cyhalothrin 24% Capsule Suspension | 16.47 |
| Novaluron 51% Mill base | 37.30 |
| Xanthum gum | 0.2 |
| Silwet 408 | 2.3 |
| Water | q.s. |

The ZC formulation including Lambda-cyhalothrin CS and Novaluron Mill base with active ingredients and excipients in a given ratio shown above was prepared as per the process of Example 1. The ZC formulation of Example 2 results into novaluron 200g/L and lambda-cyhalothrin 40g/L.

### EXAMPLE 10

| **Lambda-cyhalothrin-Novaluron ZC** | |
|---|---|
| Lambda-cyhalothrin 24% Capsule Suspension | 26.5 |
| Novaluron 51% Mill base | 63.9 |
| Xanthum gum | 0.1 |
| Rhodacal DS-10 | 5.5 |
| Water | q.s. |

The ZC formulation including Lambda-cyhalothrin CS and Novaluron Mill base with active ingredients and excipients in a given ratio shown above was prepared as per the process of Example 1. The ZC formulation of Example 3 will give novaluron 370g/L and lambda-cyhalothrin 70g/L.

### EXAMPLE 11

| **Lambda-cyhalothrin-Novaluron ZC** | |
|---|---|
| Lambda-cyhalothrin 24% Capsule Suspension | 8.94 |
| Novaluron 51% Mill base | 19.65 |
| Xanthum gum | 0.25 |
| Silwet 408 | 3.0 |
| Water | q.s. |

The ZC formulation including Lambda-cyhalothrin CS and Novaluron Mill base with active ingredients and excipients in a given ratio shown above was prepared as per the process of Example 1. The ZC formulation of Example 4 will give novaluron 100g/L and Lambda-cyhalothrin 20g/L.

### EXAMPLE 12:

| **Ingredients** | **Quantity (%)** |
|---|---|
| **Lambda-cyhalothrin 24% Capsule Suspension (CS)** | |
| Lambda-cyhalothrin Technical | 24.74 |
| Soyabean oil | 17 |
| Isocyanate monomers | 0.63 |
| Propylene glycol | 11 |
| Pluronic P 104 | 2.5 |
| Ethylene diamine | 0.33 |
| Antifoaming agent | 0.2 |
| Water | q.s |
| Total | 100 |

| **Chlorfluazurone 51% Mill base** | |
|---|---|
| Chlorfluazurone Technical | 52.61 |
| Sodium lignosulphonate | 10.50 |
| Antifoaming agent | 0.50 |
| Water | q.s. |
| Total | 100 |

| **Lambda-cyhalothrin- Chlorfluazurone ZC** | |
|---|---|
| Lambda-cyhalothrin 24% Capsule Suspension | 16.47 |
| Chlorfluazurone 51% Mill base | 37.30 |
| Xanthum gum | 0.2 |
| Silwet 408 | 1.8 |
| Attagel 50 | 0.5 |
| Water | q.s. |

The ZC formualtion including Lambda-cyhalothrin CS and Chlorfluazurone Mill base with active ingredients and excipients in a given ratio shown above was prepared as per the process of Example 1. The ZC formulation of Example 5 will give chlorfluazurone 200g/L and Lambda-cyhalothrin 40g/L.

### Test for suspensibility and stability of the active ingredient

Stability tests were carried out under the following conditions: An accelerated storage test, in which a co-formulation sample (Examples 8 and 9) were prepared as per Example 8 were stored in an oven for 2 weeks at 54±2°C, and their physical-chemical and technical properties are compared to those of a sample of the same batch which was not submitted to the test. This test is intended to represent a simulation of the behavior of a formulation after a 2 years storage period.

**Table-1 Accelerated storage test results**

| **Sr.** No. | **Test** | **Example** 8 | | **Example** 9 | | |
|---|---|---|---|---|---|---|
| | | 0 days | 14 days | 0 days | 14 days | |
| 1 | Appearance | Off white flowable ZC | Off white flowable ZC with hairline bleeding at the top but after shaking, became homogeneous flowable ZC | Off white flowable ZC | Off white flowable ZC with hairline bleeding at the top but after shaking, became homogeneous flowable ZC | |
| 2 | Novaluron ai content (%w/w ) | 31.87 | 31.86 | 18.69 | 18.68 | |
| | Lambda-cyhalothrin ai content (%w/w ) | 6.18 | 6.16 | 6.39 | 6.16 | |
| 3 | Suspensibility (%w/w) | 99 | 99.2 | 98.5 | 99 | |
| 4 | Spontaneity of dispersion (%w/w) | 96 | 93 | 97 | 95 | |
| 5 | pH (1 % aq. suspension) | | 7.21 | 7.39 | 6.95 | 6.91 |
| 6 | Persistent foam (in ml after 1 minute) | | 15 | 15 | 15 | 15 |
| 7 | Wet sieve test ( % retained on 75µ standard test sieve) | | Nil | Nil | Nil | Nil |
| 8 | Pourability % w/w | Residue | 1.2 | 1.48 | 1.35 | 1.45 |
| | | Rinse residue | 0.01 | 0.015 | 0.02 | 0.015 |
| 9 | Particle size in micron | D₉₀ | 8.7 | 8.8 | 8.3 | 8.4 |
| | | Dₘₑₐₙ | 4.2 | 4.4 | 4.1 | 4.2 |

The above results (Table 1) demonstrate that ZC formulation according to the present invention remained flowable and does not show any thickening or sedimentation in ambient as well as accelerated storage conditions. Both, Lambda-cyhalothrin and novaluron remained stable with relative degradation of below 5%, which complies with the requirement of the FAO and WHO Specifications for Pesticides, November 2010". The suspensibility of the ZC composition was evaluated. The suspensibility and spontaneity of dispersion indicates quantity of active ingredients that remain suspended and effortless formation of dispersion product while diluting for field application. Table shows suspensibility percentage, before and after the accelerated test for both active substances which is closer to 100%, which is well above the minimum required. Spontaneity of dispersion in % was determined and shows that both active substances are well dispersed (above 90%), before and after accelerated test. The persistent foaming (mL) was determined by measuring suspension formed after dispersion of the product in standard water and did not present any persistent foam after minute. The wet sieve and particle size is directly related with product performance. Wet sieve retention and particle size of formulation remained same ensure uniform spray and would not cause nozzle chocking. Low Pourability in residue and rinse residue mean maximum emptying out of container and ease of rinsing of container which ultimately results in lowering of loss of the formulation with container. All these tests confirm that the co-formulation of lambda-cyhalothrin and novaluron prepared according to the present invention achieved desired stability.

### Comparative study of co-formulations developed with and without Vegetable oil

Example 13 was prepared without vegetable oil to analyze the impact of vegetable oil in the stability of the ZC formulation. In this example vegetable oil was replaced by aromatic hydrocarbon (Solvesso 200).

| **Example 13 (without Vegetable oil)** | |
|---|---|
| **Ingredients** | **Quantity (%)** |
| **Lambda-cyhalothrin 24% Capsule Suspension (CS)** | |
| Lambda-cyhalothrin Technical | 24.74 |
| Solvesso 200 | 17 |
| Isocyanate monomers | 0.63 |
| Pluronic P 104 | 13.5 |
| Ethylene diamine | 0.33 |
| Antifoaming agent | 0.1 |
| Xanthum gum | 0.1 |
| Water | q.s |
| Total | 100 |

| **Novaluron 51% Mill base** | |
|---|---|
| Novaluron Technical | 52.61 |
| Sodium lignosulphonate | 4.50 |
| Propylene glycol | 6.00 |
| Antifoaming agent | 0.50 |
| Water | q.s. |
| Total | 100 |

| **Lambda-cyhalothrin-Novaluron ZC** | |
|---|---|
| Lambda-cyhalothrin 24% Capsule Suspension | 26.5 |
| Novaluron 51% Mill base | 63.9 |
| Xanthum gum | 0.1 |
| Silwet 408 | 3 |
| Attagel 50 | 0.5 |
| Water | q.s. |

The ZC formulation containing Lambda-cyhalothrin CS and Novaluron mill base with excipient in a given ratio as shown above was prepared as per the process of example -10. The ZC formulation so prepared in Example-13 gave Novaluron 370g/L and Lambda-cyhalothrin 70g/L. This sample was prepared using aromatic hydrocarbon (Solvesso 200) base lambda-cyhalothrin CS where Vegetable oil is replaced with aromatic hydrocarbon (Solvesso 200). The sample was studied and analysed against Example -10. The sample prepared is flowable initially and after two weeks storage in ambient sample shows slight curding, when shaken for reconstitution sample became thick. Similar Phenomenon was observed in accelerated storage conditions when sample kept at 54°C. The sample showed top separation called "bleeding" and when shaken for reconstitution became thick.

### EXAMPLE 14

| **Lambda-cyhalothrin-Novaluron ZC** | |
|---|---|
| Lambda-cyhalothrin 24% Capsule Suspension | 22.13 |
| Novaluron 51% Mill base | 66.27 |
| Xanthum gum | 0.1 |
| Silwet 408 | 3.0 |
| Attagel 50 | 0.6 |
| Water | q.s. |

The ZC formulation containing Lambda-cyhalothrin CS and Novaluron mill base with excipient in a given ratio as shown above was prepared as per the process of Example-10. The ZC formulation so prepared in Example-14 gave Novaluron 400g/L and lambda-cyhalothrin 60g/L. This sample was prepared using aromatic hydrocarbon (Solvesso 200) base lambda-cyhalothrin CS where Vegetable oil is replaced with aromatic hydrocarbon (Solvesso 200). The sample was studied and analysed against Example-10. The sample prepared is flowable initially and after two weeks storage in ambient sample shows slight curding, when shaken for reconstitution sample became thick. Similar Phenomenon was observed in accelerated storage conditions when sample kept at 54°C. The sample showed top separation called "bleeding" and when shaken for reconstitution became thick.

### Study of effect of individual components on the stability of lambda-cyhalothrin-novaluron ZC

| **Ingredients** | **Example-15** | **Example-16** | **Example-17** |
|---|---|---|---|
| Novaluron mill base | 66.27 | 66.27 | 66.72 |
| Lambda-cyhalothrin CS | 22.13 | 22.13 | 0.00 |
| Water | QS | QS | 5.4 |
| Xanthum gum | 5.00 | 6.00 | 6.00 |
| Silwet-408 | 3.00 | 0.00 | 0.00 |
| Attagel-50 | 0.60 | 0.00 | 0.00 |
| | 100.0 | 100 | 100 |
| Objective | Sample with Attagel-50 to check bleeding | Sample without Silwet-408 to avoid effect of excessive wetting agent | Sample without Lambdacyhalothrin CS to observe effect of lambda-cyhalothrin CS |
| Stability data (Ambient) | Flowable, but on shake, became thick | Flowable, but on shake became thick | Flowable. On shake also remained flowable. |
| Stability data (14 days AHS) | Thickening. On shake became thick | Flowable with top bleeding, but on shake became thick | Flowable with top bleeding. On shake remained Flowable |

The ZC formulation was prepared as per the process described in Example-10. The sample prepared in Ex.15 with an objective to study to reduce top separation/bleed so that thickening can be controlled by addition of Attagel-50 (the viscosity modifier). Ex.16 was prepared with an objective to study the effect of wetting agent on thickening of the ZC formulation. Silwet-408 was removed from the ZC formulation and sample was studied. Ex.17 was prepared with an objective to study compatibility of Lambdacyhalothrin CS. The ZC composition of Ex.15, Ex.16 and Ex.17 gave novaluron 400g/L and Lambdacyhalothrin 70 g/L ZC. Upon test, samples (Ex.15 and Ex.16) remained flowable in ambient condition but when shaken for reconstitution, it showed thickening. Similarly, in AHS, these samples become thick when shaken for reconstitution. Surprisingly, it has been found that the example 18 remained flowable in ambient as well as AHS conditions and does not show any thickening behaviour when shaken for reconstitution. This lead to the conclusion that the solvent used in Lambdacyhalothrin CS formulation is responsible for thickening of novaluron mill base and results ultimately into unstable ZC formulation of lambda-cyhalothrin and novaluron.

### Toxicity Study Test Results

To achieve low toxicity co-formulation, encapsulation of pyrethroids was targeted. The efficiency of microencapsulation was set as a parameter to identify toxicity characteristic of the co-formulation. The samples prepared in Example 10 and Example 11 were taken to calculate free lambda-cyhalothrin (% relative to total content) under ambient as well as in AHS conditions.

| | | **Example 10** | | **Example 11** | |
|---|---|---|---|---|---|
| | | 0 days (Ambient) | 14 days (AHS) | 0 days (Ambient) | 14 days (AHS) |
| Contents (%) | Lambda-cyhalothrin | 6.18 | 6.16 | 6.39 | 6.16 |
| | Novaluron | 31.87 | 31.86 | 18.69 | 18.68 |
| Free lambda-cyhalothrin (% relative to total content) | | 0.50% | 0.53% | 0.59% | 0.58% |

The percentage of free lambda-cyhalothrin relative to the total content of lambda-cyhalothrin was found to be 0.1% to 0.6% under ambient as well as AHS conditions. This means that only a very small quantity of this active ingredient is outside the capsule itself, even after the accelerated test. This is a major beneficial factor in terms of end-usage of the co-formulation of the present invention, due to the skin irritating characteristics of lambda-cyhalothrin mentioned herein above.

The microencapsulation of pyrethroids as per the process described in this invention resulted in very low level of free lambda-cyhalothrin content in the co-formulation. Such a low level of free lambda-cyhalothrin is considered to be negligent for causing any kind of skin irritation to the user of the co-formulation. Thus, microencapsulated pyrethroids prepared according to the process described in this invention led to a co-formulation that has minimum level of toxicity.

Therefore, the stable co-formulation prepared according to the process disclosed in the present invention exhibited good stability. The capsule suspension formed by encapsulating pyrethroids suspended in vegetable oil results in stable co-formulation when mixed with suspension concentrate of benzoylurea. Vegetable oil does not interact with the formulation of benzoylurea and results into a stable co-formulation of pyrethroids (knock-down insecticide) and benzoylurea (long-term insecticide). Also, encapsulation of pyrethroids with protective coating or shell prevents skin exposure causing paranaesthesia (hyperactivity of cutaneous sensory nerve fibres leading to skin irritation).

## Claims

1. A co-formulation comprising:
(a) microencapsulated formulation comprising a lambdacyhalothrin, solubilized in soyabean oil, the solubilized lambdacyhalothrin being encapsulated in a capsule having a polymeric shell wall; and
(b) a suspension concentrate comprising novaluron.

2. The co-formulation of claim 1, wherein the lambda-cyhalothrin is present in an amount from about 0.1% to about 60% w/w of the co-formulation, novularon is present in an amount from about 1% to about 60% w/w of the co-formulation, and soyabean oil is present in an amount of from about 0.1% to about 50% w/w of the co-formulation.

3. A process for preparation of the stable co-formulation of claim 1, said process comprising:
a. preparing an encapsulated lambda-cyhalothrin formulation;
b. preparing a novaluron suspension concentrate formulation; and
c. preparing a co-formulation of lambda-cyhalothrin and novaluron by mixing suspension concentrate of lambda-cyhalothrin and novaluron.

4. A non-therapeutic method of controlling or preventing unwanted pests, said method comprising, applying an effective amount of the co-formulation of claim 1 or claim 2 to the pests or to their locus.

5. The method of controlling or preventing unwanted pests as claimed in claim 4 wherein insect pests belong to classes comprising Lepidoptera, Arachnida, Hemiptera, Bilateria, Hymenoptera, Coleoptera, Diptera, Anoplura and Hymenoptera.

## Patentansprüche

1. Co-Formulierung, umfassend:
(a) eine mikroverkapselte Formulierung, die ein in Sojabohnenöl solubilisiertes Lambda-Cyhalothrin umfasst, wobei das solubilisierte Lambda-Cyhalothrin in einer Kapsel mit einer polymeren Hüllenwand verkapselt ist; und
(b) ein Suspensionskonzentrat, das Novaluron umfasst.

2. Co-Formulierung nach Anspruch 1, wobei das Lambda-Cyhalothrin in einer Menge von etwa 0,1 Gew.-% bis etwa 60 Gew.-% der Co-Formulierung vorhanden ist, Novaluron in einer Menge von etwa 1 Gew.-% bis etwa 60 Gew.-% der Co-Formulierung vorhanden ist, und Sojaöl in einer Menge von etwa 0,1 Gew.-% bis etwa 50 Gew.-% der Co-Formulierung vorhanden ist.

3. Verfahren zur Herstellung der stabilen Co-Formulierung nach Anspruch 1, wobei das Verfahren umfasst:
a. Herstellen einer verkapselten Lambda-Cyhalothrin-Formulierung;
b. Herstellen einer Novaluron-Suspensionskonzentrat-Formulierung; und
c. Herstellen einer Co-Formulierung von Lambda-Cyhalothrin und Novaluron durch Mischen des Suspensionskonzentrats von Lambda-Cyhalothrin und Novaluron.

4. Nicht-therapeutisches Verfahren zur Bekämpfung oder Vorbeugung von unerwünschten Schädlingen, wobei das Verfahren das Aufbringen einer wirksamen Menge der Co-Formulierung nach Anspruch 1 oder 2 auf die Schädlinge oder auf ihren Standort umfasst.

5. Verfahren zur Bekämpfung oder Vorbeugung unerwünschter Schädlinge nach Anspruch 4, wobei die Insektenschädlinge zu Klassen gehören, die Lepidoptera, Arachnida, Hemiptera, Bilateria, Hymenoptera, Coleoptera, Diptera, Anoplura und Hymenoptera umfassen.

## Revendications

1. Co-préparation, comprenant :
(a) une préparation micro-encapsulée comprenant une lambda-cyhalothrine, solubilisée dans de l'huile de soja, la lambda-cyhalothrine solubilisée étant encapsulée dans une capsule ayant une paroi d'enveloppe polymérique ; et
(b) un concentré en suspension comprenant du novaluron.

2. Co-préparation selon la revendication 1, dans laquelle la lambda-cyhalothrine est présente en une quantité d'environ 0,1 % à environ 60 % m/m de la co-préparation, le novaluron est présent en une quantité d'environ 1 % à environ 60 % m/m de la co-préparation, et l'huile de soja est présente en une quantité d'environ 0,1 % à environ 50 % m/m de la co-préparation.

3. Processus pour produire la co-préparation stable selon la revendication 1, ledit processus comprenant :
a. la production d'une préparation lambda-cyhalothrine encapsulée ;
b. la production d'une préparation de concentré en suspension de novaluron ; et
c. la production d'une co-préparation de lambda-cyhalothrine et de novaluron en mélangeant le concentré en suspension de lambda-cyhalothrine et de novaluron.

4. Procédé non thérapeutique de contrôle ou de prévention d'organismes nuisibles indésirables, ledit procédé comprenant l'application d'une quantité efficace de la co-préparation de la revendication 1 ou de la revendication 2 sur les organismes nuisibles ou sur leur site.

5. Procédé de contrôle ou de prévention d'organismes nuisibles indésirables selon la revendication 4, dans lequel des organismes nuisibles insectes appartiennent à des classes comprenant des lépidoptères, arachnides, hémiptères, bilatériens, hyménoptères, coléoptères, diptères, anoploures et hyménoptères.
